# EUROPÄISCHE PATENTANMELDUNG

(11) **EP 4 424 459 A1**
(43) Veröffentlichungstag der Anmeldung: **04.09.2024**
(21) Anmeldenummer: 24156056.4
(22) Anmeldetag: 06.02.2024
(51) Int. Cl.: B23P 19/04, B25B 27/00, B60J 10/00

(54) **VORRICHTUNG UND VERFAHREN ZUM APPLIZIEREN EINES UMLAUFENDEN DICHTUNGSPROFILS AUF EINEM KAROSSERIEBAUTEIL**

(30) Priorität: 10.02.2023 DE 102023103286
(71) Anmelder: thyssenkrupp Automotive Body Solutions GmbH, 74076 Heilbronn (DE); thyssenkrupp AG, 45143 Essen (DE)
(72) Erfinder: Siebenborn, Christoph, 66679 Losheim am See (DE); Schneider, Marc, 66636 Tholey (DE); Lobüscher, Kevin, 54411 Hermeskeil (DE)
(74) Vertreter: thyssenkrupp Intellectual Property GmbH

(57) **Zusammenfassung**

Die vorliegende Erfindung betrifft eine Applikationsvorrichtung (1) zum Applizieren eines umlaufenden Dichtungsprofils (2) auf einem Karosseriebauteil umfassend einen Applikationskopf (3), wobei der Applikationskopf (3) eine Andrückeinheit (4) und eine Zuführeinheit (5) umfasst, wobei die Zuführeinheit (5) ausgebildet ist, ein zu applizierendes Dichtungsprofil (2) der Andrückeinheit (4) über einen Dichtungsprofileinlauf (6) der Andrückeinheit (4) zuzuführen, und wobei die Andrückeinheit (4) ausgebildet ist, ein zugeführtes Dichtungsprofil (2) über einen Dichtungsprofilauslauf (7) der Andrückeinheit (4) auf das Karosseriebauteil aufzubringen. Des Weiteren umfasst der Applikationskopf (3) ein Führungselement (8), wobei das Führungselement (8) in einer Arbeitsposition (9) zur Führung eines freien Endes (21, 22) eines zu applizierenden Dichtungsprofils (2), das den Dichtungsprofileinlauf (6) verlassen hat, ausgebildet ist.

Ferner betrifft die Erfindung ein Verfahren zum Applizieren eines umlaufenden Dichtungsprofils (2) auf einem Karosseriebauteil, wobei das zu applizierende Dichtungsprofil (2) einer Andrückeinheit (4) zugeführt wird, die Andrückeinheit (4) relativ zu dem Karosseriebauteil bewegt wird, und mittels der Andrückeinheit (4) das Dichtungsprofil (2) auf das Karosseriebauteil aufgebracht wird, wobei ein freies Ende (21, 22) des Dichtungsprofils (2) vor dem Aufbringen auf das Karosseriebauteil von einem Führungselement (8) geführt wird.

## Beschreibung

Die Erfindung betrifft eine Applikationsvorrichtung zum Applizieren eines umlaufenden Dichtungsprofils auf einem Karosseriebauteil umfassend einen Applikationskopf, wobei der Applikationskopf eine Andrückeinheit und eine Zuführeinheit umfasst, wobei die Zuführeinheit ausgebildet ist, ein zu applizierendes Dichtungsprofil der Andrückeinheit über einen Dichtungsprofileinlauf der Andrückeinheit zuzuführen, und wobei die Andrückeinheit ausgebildet ist, ein zugeführtes Dichtungsprofil über einen Dichtungsprofilauslauf der Andrückeinheit auf das Karosseriebauteil aufzubringen. Des Weiteren betrifft die Erfindung ein Verfahren zum Applizieren eines umlaufenden Dichtungsprofils auf einem Karosseriebauteil, wobei das zu applizierende Dichtungsprofil einer Andrückeinheit zugeführt wird, die Andrückeinheit relativ zu dem Karosseriebauteil bewegt wird, und mittels der Andrückeinheit das Dichtungsprofil auf das Karosseriebauteil aufgebracht wird.

Eine Applikationsvorrichtung zum Applizieren eines Dichtungsprofils auf einem dem Verschließen einer Karosserieöffnung dienenden Karosseriebauteil mit einem Anrollkopf zum Aufbringen des Dichtungsprofils ist beispielsweise aus der DE 10 2017 221 018 B3 bekannt. Aus der DE 101 38 781 A1 ist eine weitere Applikationsvorrichtung zum Applizieren eines Dichtungsprofils unter Nutzung eines Roboters bekannt, mit der ein Dichtungsprofil mit Hilfe von Andrückrollen sukzessive an einer Fläche einer Fahrzeugtür einer vorgegebenen Montagelinie folgend angedrückt und so appliziert wird. Auch in der DE 10 2011 050 750 A1 wird eine Applikationsvorrichtung beschrieben. In Bezug auf die Applikationsvorrichtung wird gezeigt, dass bis zu dem Dichtungsprofileinlauf eine Führung des Dichtungsprofils realisiert ist.

Beim Applizieren eines Endlos-Dichtungsprofils auf ein Karosseriebauteil mittels einer solchen Applikationsvorrichtung, wie beispielsweise in den beiden vorstehend genannten Druckschriften beschrieben, entsteht immer eine Stoßstelle aus Dichtungsprofilanfang und Dichtungsprofilende. Diese Stoßstelle soll möglichst unauffällig aussehen, was durch einen möglichst kleinen Abstand der Stirnflächen und eine möglichst gute Fluchtung des Profilanfangs und Profilendes erreicht werden soll. Prozessbedingt ist die Führung des Endlosdichtungsprofils in der Andrückrolle beim Ansetzen auf das Karosseriebauteil und insbesondere beim Applizieren des letzten Abschnitts des Dichtungsprofilendes auf das Karosseriebauteil, also dann, wenn ein freies Ende des Dichtungsprofils appliziert werden muss, nur bedingt möglich. Dadurch, dass das Führungsteil, auch Mundstück genannt, welches das Dichtungsprofil auf der Andrückrolle führt und in Position hält, aus Platzgründen nicht unmittelbar in der Nähe der Applikationsstelle angeordnet werden kann, sondern einen bestimmten Abstand zur Applikationsstelle aufweist, läuft am Ende des Applikationsprozesses das letzte Dichtungsprofilstück als freies Ende des Dichtungsprofils aus diesem Führungsteil heraus. Beim anschließenden Überrollen durch die Andrückrolle kann es daher vorkommen, dass das Dichtungsprofilende nicht ausreichend genug positioniert angeklebt wird und es aus diesem Grund im Dichtungsstoßbereich zu Fluchtungsfehlern von Dichtungsprofilanfang zu Dichtungsprofilende kommen kann.

Vor diesem Hintergrund ist es eine Aufgabe der vorliegenden Erfindung, eine Vorrichtung und ein Verfahren zum Applizieren eines umlaufenden Dichtungsprofils auf einem Karosseriebauteil zu verbessern, insbesondere derart, dass mit hoher Zuverlässigkeit und Wiederholbarkeit beim Applizieren eines umlaufenden Dichtungsprofils eine gute Dichtungsstoßqualität beim Applizieren erreicht wird.

Zur Lösung dieser Aufgabe werden eine Applikationsvorrichtung sowie ein Verfahren zum Applizieren eines umlaufenden Dichtungsprofils gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht eine Applikationsvorrichtung zum Applizieren eines umlaufenden Dichtungsprofils auf einem Karosseriebauteil vor, insbesondere einer Fahrzeugkarosserie oder einem Teil der Fahrzeugkarosserie, insbesondere einer Fahrzeugtür. Die Applikationsvorrichtung umfasst einen Applikationskopf, wobei der Applikationskopf eine Andrückeinheit, insbesondere eine Andrückrolle, und eine Zuführeinheit aufweist. Die Zuführeinheit ist ausgebildet, ein zu applizierendes Dichtungsprofil der Andrückeinheit über einen Dichtungsprofileinlauf der Andrückeinheit zuzuführen. Die Andrückeinheit ist ausgebildet, ein zugeführtes Dichtungsprofil über einen Dichtungsprofilauslauf der Andrückeinheit auf das Karosseriebauteil aufzubringen. Erfindungsgemäß ist vorgesehen, dass der Applikationskopf des Weiteren ein Führungselement umfasst, wobei das Führungselement in einer Arbeitsposition zur Führung eines freien Endes eines zu applizierenden Dichtungsprofils, das den Dichtungsprofileinlauf der Andrückeinheit verlassen hat, ausgebildet ist. Vorteilhafterweise übernimmt das Führungselement dabei die Führung eines Dichtungsprofils somit insbesondere dann, wenn eine Führung nicht oder zumindest nicht mehr vollständig durch die Andrückeinheit beziehungsweise durch ein der Andrückeinheit zugeordnetes Mundstück erfolgen kann. Der Dichtungsprofileinlauf erstreckt sich insbesondere bis zu der Andrückeinheit, insbesondere bis zu der Andrückrolle. Insbesondere ist vorgesehen, dass die Applikationsvorrichtung wenigstens ein weiteres Führungselement umfassen kann, welches das Dichtungsprofil insbesondere bis zudem dem Dichtungsprofileinlauf führt. Bei einer solchen Ausgestaltung führt dann vorteilhafterweise wenigstens ein erstes Führungselement der Applikationsvorrichtung das Dichtungsprofil bis zu dem Dichtungsprofileinlauf, beispielsweise wie in Fig. 1 der DE 10 2011 050 750 A1 gezeigt. Wenigstens ein zweites Führungselement der Applikationsvorrichtung führt ein freies Ende des Dichtungsprofils, wenn das freie Ende den Dichtungsprofileinlauf der Andrückeinheit verlassen hat und das wenigstens eine zweite Führungselement in der Arbeitsposition ist. Das Mundstück ist dabei insbesondere ein erstes Führungselement. Im Nachfolgenden wird, wenn nicht anders ausgeführt, mit "Führungselement" das "wenigstens eine zweite Führungselement" gemeint, also das Führungselement, das in einer Arbeitsposition zur Führung eines freien Endes eines zu applizierenden Dichtungsprofils, das den Dichtungsprofileinlauf der Andrückeinheit verlassen hat, ausgebildet ist.

Durch das erfindungsgemäße Führungselement wird vorteilhafterweise eine zusätzliche Führung bereitgestellt, sodass auch ein freies Ende eines Dichtungsprofils, also insbesondere ein Dichtungsprofilendstück, bis zum Aufbringen auf das Karosseriebauteil geführt wird. Das freie Ende wird somit vorteilhafterweise von dem Führungselement noch beim Aufbringen auf das Karosseriebauteil geführt. Insbesondere wirkt das Führungselement vorteilhafterweise auch einem möglichen Bestreben des freien Endes des Dichtungsprofils entgegen, eine aufgrund des Formgedächtnisses des Dichtungsprofils andere Ausrichtung anzunehmen, als für das Applizieren vorgesehen. Denn das Führungselement hält das freie Dichtungsprofil vorteilhafterweise auf der für das Aufbringen des Dichtungsprofils vorgesehenen Linie. Dank des Führungselementes ist ein freies Ende eines Dichtungsprofils also mit hoher Präzision positionierbar. Auf diese Weise lässt sich insbesondere über eine Vielzahl von Applikationsvorgängen hinweg eine hohe Stoßgenauigkeit erzielen, insbesondere derart, dass der Anfang und das Ende eines applizierten Dichtungsprofils innerhalb von 0,5 mm (mm: Millimeter) fluchten. Hierdurch ist ein Dichtungsstoß kaum als solcher zu erkennen und wirkt besonders hochwertig.

Insbesondere ist der Applikationskopf der Applikationsvorrichtung ein Applikationskopf zum Applizieren eines Dichtungsprofils in einer Dachöffnung einer Fahrzeugkarosserie, insbesondere einer Dachöffnung für ein Schiebe- oder Panoramadach.

Insbesondere ist das Führungselement derart ausgebildet, dass ein freies Ende eines Dichtungsprofils zumindest von einer Seite von dem Führungselement geführt wird, wobei das Führungselement das freie Ende vorteilhafterweise von der zumindest einen Seite abstützt. Als Ausgestaltungsvariante ist aber insbesondere auch ein Führungselement vorgesehen, bei dem ein freies Ende eines Dichtungsprofils an beiden Längsseiten des Dichtungsprofils von dem Führungselement geführt wird, wobei das Führungselement in diesem Fall vorzugsweise mehrstückig ausgebildet ist. Weiter vorteilhaft weist das Führungselement eine Einlaufschräge auf, über die das freie Ende des Dichtungsprofils vereinfacht in den Führungsbereich des Führungselements gelangt. Der Führungsbereich des Führungselementes ist dabei insbesondere der Bereich des Führungselements, in dem die Führung eines freien Endes eines Dichtungsprofils für eine korrekte Ausrichtung des freien Endes für das nachfolgende Applizieren erfolgt. Der Führungsbereich des Führungselementes wird insofern insbesondere durch einen einem Karosseriebauteil, auf das ein Dichtungsprofil appliziert werden soll, zugewandten Abschnitt des Führungselementes gebildet.

Eine weitere vorteilhafte Ausgestaltung sieht vor, dass das Führungselement in der Arbeitsposition bezogen auf eine Richtung, in die ein Dichtungsprofil auf ein Karosseriebauteil appliziert wird, vor dem Dichtungsprofilauslauf angeordnet ist. Vorteilhafterweise kann hierdurch ein freies Ende eines Dichtungsprofils, insbesondere ein freies Ende eines Dichtungsprofils, das den Dichtungsprofileinlauf der Andrückeinheit bereits verlassen hat und insbesondere aufgrund von elastischen Rückstellkräften des Dichtungsprofils sich aus dem Führungsbereich der Andrückeinheit hin zu dem Karosseriebauteil bewegt hat, durch das Führungselement geführt und geeignet positioniert werden, sodass dieses freie Ende dann von der Andrückeinheit entlang der vorgesehenen Linie appliziert werden kann. Insbesondere ist diese Ausgestaltung vorteilhaft, wenn die Andrückeinheit als Andrückrolle ausgebildet ist.

Weiter vorteilhaft ist das Führungselement in der Arbeitsposition derart angeordnet, dass ein freies Ende eines zu applizierenden Dichtungsprofils vor dem Erreichen des Dichtungsprofilauslaufs von dem Führungselement zumindest teilweise abgestützt wird, insbesondere entgegen der Schwerkraft abgestützt wird. Vorteilhafterweise verhindert das Führungselement so, dass das freie Ende aufgrund der Schwerkraft die vorgesehene Applikationslinie verlässt. So trägt diese Ausgestaltung vorteilhafterweise weiter zu einer hohen Stoßgenauigkeit bei. Insbesondere weist das Führungselement zum Abstützen des freien Endes eine Abstützfläche auf. Weist das Führungselement zudem eine Einlaufschräge auf, geht die Einlaufschräge als Fläche vorteilhafterweise in Richtung des Bauteils, auf das das Dichtungsprofil aufgebracht wird, in die Abstützfläche über.

Gemäß einer weiteren vorteilhaften Ausgestaltung ist das Führungselement in der Arbeitsposition derart an dem Applikationskopf angeordnet, dass sich ein Führungsbereich des Führungselements parallel zu einer Karosseriebauteiloberfläche erstreckt, auf die ein Dichtungsprofil appliziert wird. Insbesondere ist bei dieser Ausgestaltung vorgesehen, dass sich der Führungsbereich des Führungselements parallel zu einer vorgesehenen Applikationslinie auf einer Karosseriebauteiloberfläche erstreckt. Der Führungsbereich ist dabei insbesondere der Bereich des Führungselements, der die Führung eines freien Endes eines zu applizierenden Dichtungsprofils für eine korrekte Ausrichtung des freien Endes für das nachfolgende Applizieren übernimmt. Insbesondere kann zumindest ein Teil der Abstützfläche von dem Führungsbereich umfasst sein, wobei die Abstützfläche vorteilhafterweise orthogonal zu der Fläche des Karosseriebauteils ausgerichtet ist, auf die das Dichtungsprofil appliziert werden soll. Durch diese Anordnung des Führungselements wird vorteilhafterweise die Dichtungsstoßqualität weiter verbessert. Insbesondere ist das Führungselement in der Arbeitsposition weiter vorteilhaft derart an dem Applikationskopf angeordnet, dass der Führungsbereich des Führungselements in einer fluchtenden Linie mit einer Führung der Andrückeinheit ausgerichtet ist, und insofern vorteilhafterweise eine Verlängerung der Führung durch die Andrückeinheit bildet.

Eine weitere vorteilhafte Ausgestaltung der Applikationsvorrichtung sieht vor, dass der Applikationskopf ein dem Dichtungsprofileinlauf der Andrückeinheit zugeordnetes Mundstück aufweist, wobei das Mundstück ausgebildet ist, das der Andrückeinheit zugeführte Dichtungsprofil zu führen. Insbesondere ist das Mundstück ein von dem wenigstens einen ersten Führungselement umfasstes erstes Führungselement. Der Abstand zwischen dem Führungselement in der Arbeitsposition und dem Dichtungsprofilauslauf entspricht dabei vorzugsweise höchstens dem Abstand zwischen dem Mundstück und dem Dichtungsprofil Auslauf. Vorteilhafterweise wird auf diese Weise sichergestellt, dass ein freies Ende eines zu applizierenden Dichtungsprofils, das mit dem Verlassen des Dichtungsprofileinlaufs eine Führung durch das Mundstück verliert, nahezu übergangslos von dem Führungselement geführt werden kann. Hierdurch lässt sich vorteilhafterweise mit hoher Präzision für ein gesamtes verbliebenes Endstück eines zu applizierenden Dichtungsprofils ein Applizieren entlang der vorgesehenen Applikationslinie erreichen. Insofern wird vorteilhafterweise nicht nur die Dichtungsstoßqualität verbessert, sondern es werden vorteilhafterweise auch Abweichungen von der vorgesehenen Applikationslinie vor der Stoßbildung verhindert.

Insbesondere ist weiter vorgesehen, dass der Abstand zwischen dem Führungselement in der Arbeitsposition und dem Dichtungsprofilauslauf kleiner oder gleich 30 mm ist. Der Abstand zwischen dem Führungselement in der Arbeitsposition und dem Dichtungsprofilauslauf sollte vorteilhafterweise also nicht größer als 30 mm sein. Insbesondere beträgt der Abstand zwischen 10 mm und 30 mm. Durch diesen Abstand wird vorteilhafterweise ebenfalls erreicht, dass ein freies Ende eines zu applizierenden Dichtungsprofils, das mit dem Verlassen des Dichtungsprofileinlaufs eine Führung verliert, nahezu übergangslos von dem Führungselement geführt werden kann. Insofern trägt die Einhaltung dieses Abstands ebenfalls dazu bei, dass für ein gesamtes verbliebenes Endstück eines zu applizierenden Dichtungsprofils ein Applizieren mit hoher Präzision entlang einer vorgesehenen Applikationslinie ermöglicht wird.

Eine weitere besonders vorteilhafte Ausgestaltung der Applikationsvorrichtung sieht vor, dass das Führungselement zwischen der Arbeitsposition und einer Ruheposition verstellbar ist. In der Ruheposition kann dabei vorteilhafterweise keine Führung eines zu applizierenden Dichtungsprofils erfolgen. Insbesondere ist das Führungselement gemäß einer vorteilhaften Ausgestaltungsvariante dabei verschwenkbar ausgebildet, wobei das Führungselement durch ein Verschwenken zwischen der Arbeitsposition und der Ruheposition verstellbar ist.

Vorteilhafterweise umfasst die Applikationsvorrichtung wenigstens eine dem Führungselement zugeordnete Sensoreinheit, die ausgebildet ist festzustellen, ob das Führungselement in der Ruheposition oder in der Arbeitsposition ist. Weiter vorteilhaft ist das Führungselement mittels einer Aktuatoreinheit der Applikationsvorrichtung zwischen der Arbeitsposition und der Ruheposition verstellbar. Vorteilhafterweise ist die Applikationsvorrichtung derart eingerichtet, dass das Führungselement erst von der Ruheposition in die Arbeitsposition verbracht wird, wenn das freie Ende eines zu applizierenden Dichtungsprofils den Dichtungsprofileinlauf verlässt oder kurz bevor das freie Ende eines zu applizierenden Dichtungsprofils den Dichtungsprofileinlauf verlässt, insbesondere dann, wenn das der Andrückeinheit zugeführte freie Ende eines zu applizierenden Dichtungsprofils den Dichtungsprofileinlauf erreicht. Weiter ist insbesondere vorgesehen, dass die Applikationsvorrichtung weiter derart eingerichtet ist, dass mit Beendigung eines Applikationsvorgangs eines umlaufenden Dichtungsprofils auf einem Karosseriebauteil das Führungselement wieder von der Arbeitsposition zurück in die Ruheposition verbracht wird. Alternativ hierzu ist vorgesehen, dass das Führungselement in der Arbeitsposition verbleibt, bis ein freies Ende eines Anfangsstücks eines zu applizierenden Dichtungsprofils mittels der Andrückeinheit auf ein Karosseriebauteil aufgebracht ist, und erst dann das Führungselement von der Arbeitsposition zurück in die Ruheposition verbracht wird.

Die Verstellbarkeit des Führungselementes von einer Arbeitsposition in eine Ruheposition hat den Vorteil, dass während eines Applizierens jenseits der freien Enden, wobei eine ausreichende Führung durch die Andrückeinheit realisiert wird, das Führungselement in der Ruheposition sein kann und somit vorteilhafterweise keine unerwünschten Berührungen zwischen Führungselement und Karosseriebauteil auftreten können.

Gemäß einer vorteilhaften Weiterbildung weist der Applikationskopf ein dem Dichtungsprofileinlauf der Andrückeinheit zugeordnetes Mundstück auf, wobei das Mundstück ausgebildet ist, das der Andrückeinheit zugeführte Dichtungsprofil zu führen, wobei die Applikationsvorrichtung ausgebildet ist, das Führungselement von der Ruheposition in die Arbeitsposition zu verstellen, wenn ein freies Ende eines zu applizierenden Dichtungsprofils eine vorbestimmte Position in Bezug zu dem Mundstück erreicht hat. Vorteilhafterweise wird so eine zuverlässige und stets gleichbleibende Verbringung des Führungselements von der Ruheposition in die Arbeitsposition realisiert. Dies trägt weiter zu einer gleichbleibend guten Stoßqualität bei.

Eine Ausgestaltungsvariante der Applikationsvorrichtung, bei der die Applikationsvorrichtung zum Applizieren einer Schiebedachdichtung in einer Karosserieöffnung eingerichtet ist, sieht dagegen vor, dass das Führungselement feststehend an dem Applikationskopf ist, und das Führungselement somit vorteilhafterweise stets in der Arbeitsposition ist. Bei dieser Ausgestaltungsvariante ist ein Verbringen des Führungselementes in eine Ruheposition vorteilhafterweise entbehrlich, weil aufgrund des Applizierens um die Karosserieöffnung eine Kollision ausgeschlossen ist. Zudem kann das Verbleiben des Führungselements in der Arbeitsposition vorteilhaft sein, weil so auch ein gerade applizierter Dichtungsprofilabschnitt von dem Führungselement gestützt werden kann und so das Ergebnis des Applikationsvorgangs weiter verbessert werden kann.

Das des Weiteren zur Lösung der eingangs genannten Aufgabe vorgeschlagene Verfahren zum Applizieren eines umlaufenden Dichtungsprofils auf einem Karosseriebauteil, insbesondere zum Applizieren eines umlaufenden Schiebedachdichtungsprofil in einer Karosserieöffnung, sieht vor, dass das zu applizierende Dichtungsprofil einer Andrückeinheit, insbesondere einer Andrückrolle, zugeführt wird, die Andrückeinheit relativ zu dem Karosseriebauteil bewegt wird, mittels der Andrückeinheit das Dichtungsprofil auf das Karosseriebauteil aufgebracht wird, und ein freies Ende des Dichtungsprofils vor dem Aufbringen auf das Karosseriebauteil, insbesondere unmittelbar vor dem Aufbringen auf das Karosseriebauteil, und vorteilhafterweise auch beim Aufbringen auf das Karosseriebauteil von einem Führungselement geführt wird. Durch das vorgeschlagene Verfahren wird somit vorteilhafterweise eine Führung der freien Enden eines Dichtungsprofils, das appliziert wird, erzielt, also insbesondere eine Führung eines Anfangsstücks eines zu applizierenden Dichtungsprofils und eine Führung eines Endstücks eines zu applizierenden Dichtungsprofils. Durch diese Führung wird dabei vorteilhafterweise erreicht, dass kein Versatz oder zumindest nur ein äußerst geringer Versatz, der insbesondere geringer als 0,5mm ausfällt, zwischen Dichtungsprofilanfang und Dichtungsprofil ausgebildet wird. Hierdurch treten Stoßstellen vorteilhafterweise optisch nicht hervor. Besonders vorteilhaft ist das Verfahren beim Applizieren von Schiebedachdichtungsprofilen, weil diese stärker noch als beispielsweise Karosserietürdichtungsprofile die Eigenschaft aufweisen, sich ohne Führung in eine ursprüngliche Form zurückzukehren. Die Führung mit dem Führungselement ist dabei insbesondere zusätzlich zu einer möglichen Führung, die noch vor dem Dichtungsprofileinlauf beginnt und insbesondere dazu bestimmt ist, das Dichtungsprofil korrekt der Andrückeinheit zuzuführen, vorgesehen. Es kann insofern insbesondere eine erste Führung bis zu dem Dichtungsprofileinlauf vorgesehen sein, und eine zweite Führung, die der ersten Führung in Bewegungsrichtung des Dichtungsprofils nachgelagert ist, vorgesehen sein, wobei die zweite Führung ein freies Ende des Dichtungsprofils, insbesondere ausschließlich ein freies Ende des Dichtungsprofils, führt, insbesondere bis unmittelbar vor dem Aufbringen des freien Endes auf das Karosseriebauteil, also insbesondere bis das freie Ende das Karosseriebauteil kontaktiert.

Insbesondere ist vorgesehen, dass die Andrückeinheit an einem Applikationskopf angeordnet ist, wobei der Applikationskopf an einem Roboterarm angeordnet zum Applizieren des Dichtungsprofils an dem Karosseriebauteil entlang bewegt wird. Alternativ kann auch eine stationäre Anordnung des Roboterkopfs vorgesehen werden, bei der das Karosseriebauteil zum Applizieren des Dichtungsprofils an dem Applikationskopf beziehungsweise an der Andrückeinheit entlang bewegt wird. Insbesondere ist der Applikationskopf ein Applikationskopf zum Applizieren eines Dichtungsprofils in einer Dachöffnung einer Fahrzeugkarosserie, insbesondere einer Dachöffnung für ein Schiebe- und/oder Panoramadach.

Vorteilhafterweise führt das Führungselement das freie Ende zumindest entlang einer Längsseite des Dichtungsprofils. Insbesondere ist vorgesehen, dass das Führungselement das freie Ende beidseitig führt. Es kann vorgesehen sein, dass das Führungselement das freie Ende dabei umgreift. Vorteilhafterweise wird hierdurch die Führung und somit letztlich die Stoßqualität verbessert. Weiter vorteilhaft stützt das Führungselement das freie Ende des zu applizierenden Dichtungsprofils ab, insbesondere entgegen der Schwerkraft, wodurch das Applikationsergebnis vorteilhafterweise weiter verbessert wird. Insbesondere ist dieses Abstützen des Dichtungsprofils auch vorteilhaft beim Applizieren einer Schiebedachdichtung in einer Karosserieöffnung, weil hierdurch vorteilhafterweise ein Absacken des gerade applizierten Dichtungsprofils noch besser verhindert wird.

Eine vorteilhafte Ausgestaltung des Verfahrens sieht vor, dass das Führungselement zum Führen des freien Endes des Dichtungsprofils von einer Ruheposition, in der keine Führung erfolgen kann, in eine Arbeitsposition, in der die Führung erfolgen kann, verbracht wird. Vorteilhafterweise wird das Führungselement dazu bedarfsweise von der Ruheposition in die Arbeitsposition beziehungsweise von der Arbeitsposition die Ruheposition verschwenkt. Welche Position das Führungselement eingenommen hat, wird dabei vorteilhafterweise überwacht, insbesondere sensorisch überwacht. Vorteilhafterweise verbleibt das Führungselement so lange in der Ruheposition bis ein freies Ende eine Dichtungsprofils, das auf ein Karosseriebauteil appliziert wird, einen vorgegebenen Abstand in Bezug auf die Andrückeinheit, insbesondere einen vorgegebenen Abstand in Bezug auf ein der Andrückeinheit zugeordnetes Mundstück, erreicht hat. Bis dahin erfolgt die Führung des Dichtungsprofils insbesondere durch die Andrückeinheit selbst beziehungsweise beim Einlaufen in die Andrückeinheit durch das Mundstück. Ist die vorgegebene Position, die den vorgegebenen Abstand repräsentiert, erreicht, wird das Führungselement vorteilhafterweise von der Ruheposition in die Arbeitsposition verbracht. Läuft das freie Ende nun aus einem Dichtungsprofileinlauf der Andrückeinheit, insbesondere aus dem Mundstück, heraus, so wird dieses freie Ende vorteilhafterweise von dem Führungselement geführt und in Position gehalten, um auf eine vorgesehene Applikationslinie auf dem Karosseriebauteil von der Andrückeinheit aufgebracht zu werden. Ist das Dichtungsprofil fertig appliziert, kann das Führungselement wieder in die Ruheposition verbracht werden.

Es kann aber vorgesehen sein, dass das Führungselement zur Führung und/oder Positionierung eines Dichtungsprofilanfangs, das noch nicht den Dichtungsprofilauslauf erreicht hat, zunächst noch in der Arbeitsposition verbleibt oder hierfür wieder in die Arbeitsposition verbracht wird. Spätestens dann, wenn das Anfangsstück des Dichtungsprofils appliziert ist, wird bei dieser Ausgestaltung das Führungselement in die Ruheposition verbracht. Für den besonderen Fall, dass ein Dichtungsprofil um eine Karosserieöffnung appliziert wird, wie insbesondere beim Applizieren einer Schiebedachdichtung, kann vorgesehen sein, dass das Führungselement die gesamte Zeit in der Arbeitsposition verbleibt.

Insbesondere ist vorgesehen, dass das Dichtungsprofil mit einer erfindungsgemäß ausgebildeten Applikationsvorrichtung appliziert wird. Die Applikationsvorrichtung weist dazu insbesondere die vorstehend beschriebenen Merkmale einzeln oder in geeigneter Kombination auf.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigen:
- Fig. 1: in einer perspektivischen Darstellung ein Ausführungsbeispiel für eine erfindungsgemäß ausgebildete Applikationsvorrichtung;
- Fig. 2: in einer perspektivischen Darstellung einen Ausschnitt eines Applikationskopfes eines Ausführungsbeispiels für eine erfindungsgemäß ausgebildete Applikationsvorrichtung;
- Fig. 3a bis Fig. 3c: weitere vereinfachte perspektivische Darstellungen eines Ausführungsbeispiels von Komponenten einer erfindungsgemäß ausgebildeten Applikationsvorrichtung mit einem zu applizierenden Dichtungsprofil zu unterschiedlichen Zeitpunkten;
- Fig. 4a und Fig. 4b: weitere vereinfachte perspektivische Darstellungen von weiteren Ausführungsbeispielen für Komponenten einer erfindungsgemäß ausgebildeten Applikationsvorrichtung mit einem zu applizierenden Dichtungsprofil;
- Fig. 5a und Fig. 5b: in vereinfachter Frontansicht weitere Ausführungsbeispiele für Komponenten einer erfindungsgemäß ausgebildeten Applikationsvorrichtung mit einem vollständig applizierten Dichtungsprofil; und
- Fig. 6: anhand eines Ablaufdiagramms ein Ausführungsbeispiel für ein erfindungsgemäß ausgebildetes Verfahren zum Applizieren eines umlaufenden Dichtungsprofils auf einem Karosseriebauteil.

In den verschiedenen Figuren sind gleiche Teile in der Regel mit den gleichen Bezugszeichen versehen und werden daher mitunter auch jeweils nur im Zusammenhang mit einer der Figuren erläutert.

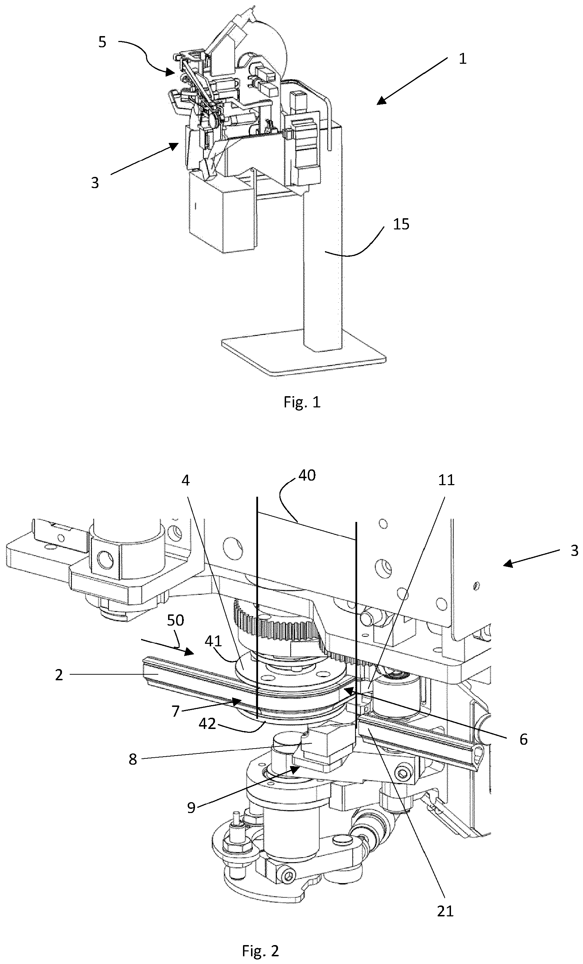

In Fig. 1 ist ein Ausführungsbeispiel für eine erfindungsgemäß ausgebildete Applikationsvorrichtung 1 dargestellt. Die Applikationsvorrichtung 1 umfasst dabei einen Applikationskopf 3, der in dem gezeigten Ausführungsbeispiel stationär an einem Träger 15 angeordnet ist. Als nicht dargestellte Ausgestaltungsvariante ist vorgesehen, dass der Applikationskopf 3 an einem Roboterarm angeordnet ist.

Der Applikationskopf 3 umfasst eine als Andrückrolle ausgebildete Andrückeinheit 4, eine Zuführeinheit 5, eine nicht explizit dargestellte Trenneinheit und ein Führungselement 8. Ein von einer ebenfalls in Fig. 1 nicht dargestellten Vorratsrolle bereitgestelltes Endlosdichtungsprofil 2 wird dabei, insbesondere über eine ebenfalls in Fig. 1 nicht dargestellte Puffereinheit, dem Applikationskopf 3 zugeführt. Die Zuführeinheit 5 ist dabei ausgebildet, das Dichtungsprofil 2 zum Applizieren auf einem Karosseriebauteil der Andrückeinheit 4 zuzuführen, wozu die Zuführeinheit 5 insbesondere in bekannter Weise eine Mehrzahl von Rollen umfasst, über die das Dichtungsprofil 2 zu der Andrückeinheit 4 hingeführt wird.

Die Andrückeinheit 4 ist ausgebildet, ein zugeführtes Dichtungsprofil 2 auf ein Karosseriebauteil aufzubringen. Die Trenneinheit zertrennt das Dichtungsprofil 2 jeweils so, dass das Dichtungsprofil 2 die für die umlaufende Anbringung auf dem Karosseriebauteil benötigte Länge aufweist. Durch das Zertrennen des Dichtungsprofils 2 entsteht jeweils ein durch ein Dichtungsprofilende gebildetes freies Ende 22 und ein durch einen Dichtungsprofilanfang gebildetes freies Ende 21.

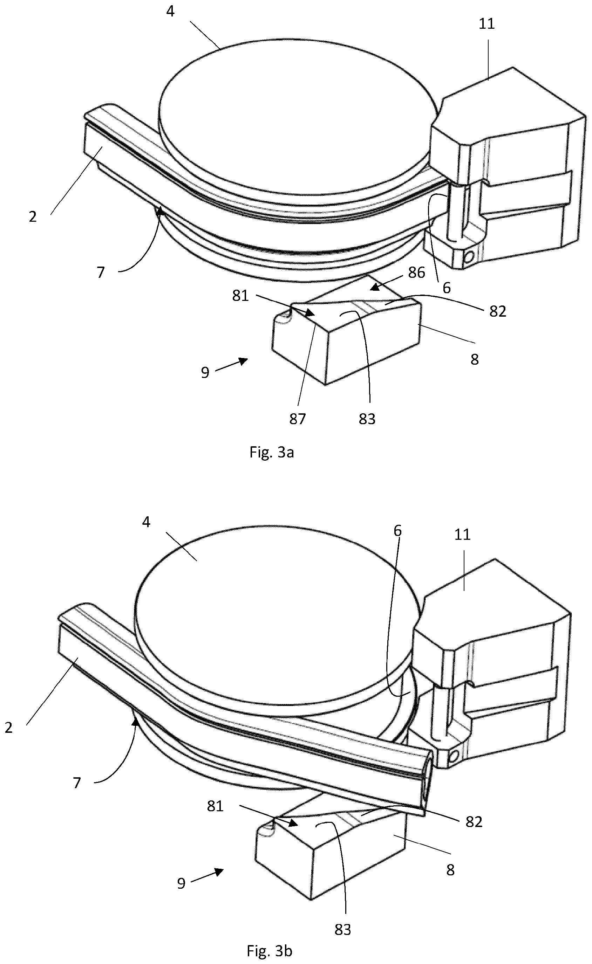

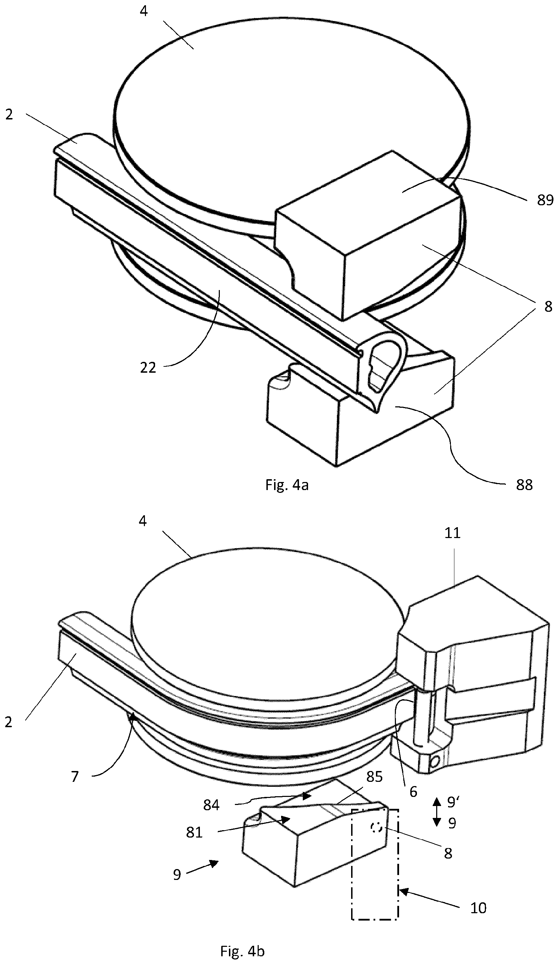

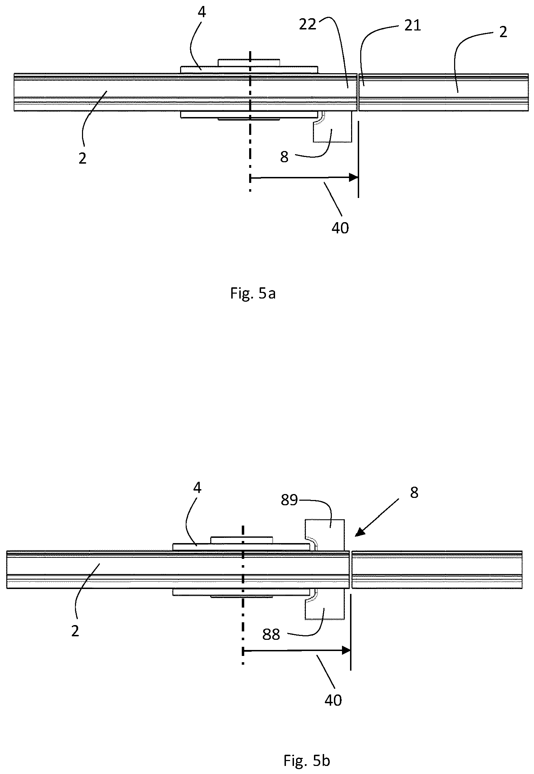

Das an dem Applikationskopf 3 angeordnete Führungselement 8 ist nun dazu eingerichtet, ein solches freies Ende 21, 22 eines zu applizierenden Dichtungsprofils 2 zu führen, um so die Stoßqualität bei einem umlaufend auf einem Karosseriebauteil applizierten Dichtungsprofil 2 zu verbessern. Details für vorteilhafte Ausgestaltungen eines Applikationskopfs 3, insbesondere für vorteilhafte Ausgestaltungen einer als Andrückrolle ausgebildeten Andrückeinheit 4 und eines der Andrückeinheit 4 zugeordnetem Führungselements 8 werden nachfolgend unter Bezugnahme auf Fig. 2, auf Fig. 3a bis Fig. 3c, auf Fig. 4a und Fig. 4b sowie auf Fig. 5a und Fig. 5b näher erläutert.

Fig. 2 zeigt dabei für eine zum Applizieren einer Schiebedachdichtung in einer Karosserieöffnung eingerichteten Applikationsvorrichtung einen Ausschnitt eines Applikationskopfes 3 mit einer als Andrückrolle ausgebildeten Andrückeinheit 4 und einem in einer Arbeitsposition 9 angeordneten Führungselement 8, wobei mittels der Andrückeinheit 4 ein Dichtungsprofil 2 auf ein Karosseriebauteil appliziert wird. Da das Karosseriebauteil den Applikationskopf 3 verdecken würde, ist das Karosseriebauteil in Fig. 2 nicht dargestellt. Ein Dichtungsprofilanfang 21, der in Fig. 2 nur als Abschnitt dargestellt ist, und in der Realität das Anfangsstück des sich ganz links in Fig. 2 fortsetzenden Dichtungsprofilstranges 2 ist, soll dabei beginnend am linken Ende des dargestellten Abschnitts und dann in die Applikationsrichtung 50 nach rechts weiterlaufend bereits auf dem Karosseriebauteil appliziert sein. Das auf das Karosseriebauteil zu applizierende Dichtungsprofil 2 ist bei der in Fig. 2 gezeigten Darstellung somit mittels der Andrückeinheit 4 bereits nahezu vollständig auf dem Karosseriebauteil appliziert worden. Es verbleibt somit nur ein kleines Stück 40 von der zum Aufbringen des Dichtungsprofils vorgesehenen Karosseriebauteiloberfläche, auf der das Dichtungsprofil 2 noch nicht aufgebracht ist.

Die Andrückeinheit 4 ist so an dem Applikationskopf 3 angeordnet, dass sich für die Andrückeinheit 4 ein Dichtungsprofileinlauf 6 und ein Dichtungsprofilauslauf 7 ergibt. Dabei führt eine in Fig. 2 nicht explizit dargestellte Zuführeinheit das zu applizierende Dichtungsprofil 2 dem Dichtungsprofileinlauf 6 der Andrückeinheit 4 zu. Ein an dem Applikationskopf 3 angeordnetes und dem Dichtungsprofileinlauf 6 der Andrückeinheit 4 zugeordnetes Mundstück 11 führt das Dichtungsprofil 2 dabei als ein erstes Führungselement, und fädelt das Dichtungsprofil 2 quasi in die Andrückeinheit 4 ein, sodass das Dichtungsprofil 2, solange noch kein freies Ende 22 des zu applizierenden Dichtungsprofils 2 erreicht ist, stets gleichbleibend von der Andrückeinheit 4 für das folgende Applizieren aufgenommen werden kann. Die als Andrückrolle ausgebildete Andrückeinheit 4 stellt durch eine obere Begrenzung 41 und eine unter Begrenzung 42 ebenfalls eine Führung für das Dichtungsprofil 2 bereit. Das Dichtungsprofil 2 wird dabei beim Applizieren von der Andrückeinheit 4 an das Karosseriebauteil gedrückt und über den Dichtungsprofilauslauf 7 der Andrückeinheit 4 auf das Karosseriebauteil aufgebracht.

Wenn nun ein Dichtungsprofilende 22 das Mundstück 11 und somit den Dichtungsprofileinlauf 6 verlassen hat, kann keine Führung mehr durch das Mundstück 11 erfolgen. Aufgrund des sogenannten Formgedächtnisses des Dichtungsprofils 2 bewegt sich das Dichtungsprofilende 22 zu dem Karosseriebauteil hin. Die Führung dieses freien Endes 22 des Dichtungsprofils übernimmt nun das in der Arbeitsposition 9 befindliche Führungselement 8, das bezogen auf die Richtung 50, in die das Dichtungsprofil 2 aktuell auf dem Karosseriebauteil appliziert wird, in der Arbeitsposition 9 vor dem Dichtungsprofilauslauf 7 an dem Applikationskopf 3 angeordnet ist. Das Führungselement 8 ist insofern insbesondere ein zweites Führungselement, also ein weiteres Führungselement zusätzlich zu dem Mundstück und/oder einer dem Mundstück vorgelagerten Führung. Der Abstand zwischen dem Führungselement 8 in der Arbeitsposition 9 und dem Dichtungsprofilauslauf 7 beträgt etwa 3 cm (cm: Zentimeter) und ist damit vorteilhafterweise geringfügig geringer als der Abstand zwischen dem Mundstück 11 und dem Dichtungsprofilauslauf 7. Das Übernehmen der Führung des freien Endes 22 des Dichtungsprofils 2 durch das Führungselement 8 wird dabei unter Bezugnahme auf Fig. 3a bis Fig. 3c näher erläutert.

In Fig. 3a bis Fig. 3c sind dabei aus Gründen der besseren Übersichtlichkeit jeweils nur eine Andrückeinheit 4, ein Mundstück 11, ein Dichtungsprofil 2 und ein Führungselement 8 dargestellt. Fig. 3a stellt dabei den Zeitpunkt des Applizierens wie in Fig. 2 dar, also kurz vor Ende des Applikationsvorgangs, zu dem das Dichtungsprofilende 22 das Mundstück 11 und somit den Dichtungsprofileinlauf 6 noch nicht verlassen hat. Das Dichtungsprofil 2 wird somit noch von dem Mundstück 11 geführt. Wie in Fig. 3a dargestellt, weist das Führungselement 8 in diesem Ausführungsbeispiel einen ersten Führungsbereich 81, eine Einlaufschräge 82 und eine Abstützfläche 83 auf, deren Funktion nachfolgend noch erläutert wird. Zudem weist das Führungselement 8 in diesem Ausführungsbeispiel eine Aussparung 86 auf, deren Form an die Form der als Andrückrolle ausgebildeten Andrückeinheit 4 ausgebildet ist, und dazu dient, das Führungselement 8 bei stabiler Ausführung dicht an die Andrückeinheit 4 anordnen zu können, ohne dass das Führungselement 8 die Funktion der Andrückeinheit 4 einschränkt. Es kann vorgesehen werden, dass das Führungselement 8 um eine Drehachse der Andrückeinheit 4 zwischen einer Arbeitsposition und einer Ruheposition verschwenkbar ist.

Fig. 3b zeigt nun einen Nachfolgezeitpunkt zu der Darstellung in Fig. 3a, wobei bei diesem Nachfolgezeitpunkt das freie Ende 22 des Dichtungsprofils 2 das Mundstück 11 und somit den Dichtungsprofileinlauf 6 verlassen hat und das Mundstück 11 das freie Ende 22 insofern nicht mehr führen kann. Da das Dichtungsprofil 2 elastisch ausgebildet ist, bewegt sich das freie Ende 22 des Dichtungsprofils zu dem Karosseriebauteil hin, wobei die Einlaufschräge 82 des Führungselements 8 dafür sorgt, dass das freie Ende 2 zuverlässig in den Führungsbereich 81 für das freie Ende 22 gelangt, und nicht etwa mit dem Führungselement 8 verkantet und an dem hinteren Teil des Führungselements 8 hängen bleibt. In der gezeigten Arbeitsposition 9 des Führungselements 8 erstreckt sich der Führungsbereich 81, insbesondere die zu dem Karosseriebauteil gewandte Kante des Führungsbereichs im Wesentlichen parallel zu der Karosseriebauteiloberfläche, auf die das Dichtungsprofil 2 appliziert werden soll, insbesondere parallel zu einer vorgesehenen Applikationslinie auf der Karosseriebauteiloberfläche. Die Abstützfläche 85 ist dabei im Wesentlichen orthogonal zu der der Karosseriebauteiloberfläche ausgerichtet, sodass zwischen der Karosseriebauteiloberfläche, auf die das Dichtungsprofil 2 appliziert werden soll, und der Abstützfläche im Wesentlichen ein rechter Winkel ausgebildet ist.

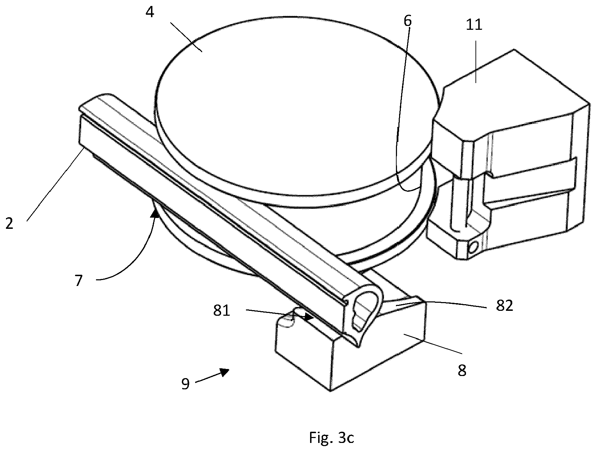

Fig. 3c zeigt wiederum einen späteren Zeitpunkt in Bezug zu Fig. 3b. Das freie Ende 22 des Dichtungsprofils 2 hat sich über die Einlaufschräge 82 in den Führungsbereich 81 bewegt, wo das freie Ende 22 von der Abstützfläche 83 des Führungselements 8 vor dem Erreichen des Dichtungsprofilauslaufs 7 abgestützt wird. Durch dieses Abstützen und die dadurch bewirkte Führung des Führungselements 8 kann das freie Ende 22 versatzfrei zu dem bereits applizierten Dichtungsprofilanfangs 21 appliziert werden, wie insbesondere bei dem Ausführungsbeispiel in Fig. 5a dargestellt.

Fig. 4a zeigt eine vorteilhafte Ausgestaltungsvariante zu dem in Fig. 3a bis Fig. 3c gezeigten Ausführungsbeispiel. Bei dieser Ausgestaltungsvariante weist das Führungselement 8 zusätzlich zu einem unteren Führungsteil 88 ein oberes Führungsteil 89 auf, sodass das freie Ende 22 des Dichtungsprofils 2 entlang beider Längsseiten von dem Führungselement 8 geführt wird.

In Fig. 4b ist eine weitere vorteilhafte Ausgestaltungsvariante zu dem in Fig. 3a bis Fig. 3c gezeigten Ausführungsbeispiel dargestellt. Zum einen ist das Führungselement 8 zwischen einer von mehreren möglichen Arbeitspositionen 9, 9` und einer Ruheposition 10, in der keine Führung eines zu applizierenden Dichtungsprofils 2 durch das Führungselement 8 erfolgen kann, verstellbar. Hierzu ist das Führungselement 8 um eine Drehachse verschwenkbar ausgebildet, wie beispielhaft in Fig. 4b angedeutet. Nur für das Führen eines freien Endes 21, 22 wird das Führungselement 8 dabei von der Ruheposition 10, die in Fig. 4b symbolisch durch eine strichpunktierte Linie dargestellt ist, in die jeweilige Arbeitsposition 9, 9` verbracht. Die Applikationsvorrichtung ist dabei ausgebildet, das Führungselement 8 von der Ruheposition 10 in eine erste Arbeitsposition 9 zu verstellen, wenn ein Dichtungsprofilende 22 eines zu applizierenden Dichtungsprofils 2 eine vorbestimmte Position in Bezug zu dem Mundstück 11 erreicht hat. In der Arbeitsposition 9 wirkt das Führungselement 8 dann, wie unter Bezugnahme auf Fig. 3a bis Fig. 3c beschrieben. Nachdem das Dichtungsprofilende 22 appliziert ist, wird das Führungselement 8 etwas angehoben, wie durch den Doppelpfeil in Fig. 4b symbolisch dargestellt, und so in eine zweite Arbeitsposition 9` verbracht. Ein zweiter Führungsbereich 84 des Führungselements 8 mit einer zweiten Einlaufschräge 85 ist dann bereit, um einen neuen Dichtungsprofilanfang 21 für einen weiteren Applikationsvorgang nach dem Verlassen des Mundstücks 11 und somit nach dem Verlassen des Dichtungsprofileinlaufs 6 bis zum Erreichen des Dichtungsprofilauslaufs 7 zu führen. Der Dichtungsprofilanfang 21 trifft dann auf die zweite Einlaufschräge 85 des Führungselements 8 und wird dabei von dem zweiten Führungsbereich 84 gestützt. Die Oberfläche der Einlaufschräge 85 ist vorteilhafterweise besonders behandelt, um einen Klebeabtrag von dem Dichtungsprofilanfang oder ein Festkleben des Dichtungsprofilanfangs zu verhindern. Insbesondere kann dabei vorgesehen sein, dass, vorzugsweise vor dem Verbringen in die zweite Arbeitsposition 9`, ein Film, insbesondere ein dünnflüssiger Klebefilm, auf die Einlaufschräge 85 aufgebracht wird, sodass ein Dichtungsprofilanfang 21 vorteilhafterweise über die Einlaufschräge 85 gleiten kann.

Fig. 5a und Fig. 5b zeigen in einer Frontansicht zwei mögliche Ausgestaltungen, die sich in der Ausbildung des Führungselementes 8 unterscheiden. Bei der Ausgestaltung gemäß Fig. 5a ist dabei nur ein unteres Führungsteil 88 vorgesehen, wohingegen die Ausgestaltung gemäß Fig. 5b ein unteres Führungsteil 88 und ein oberes Führungsteil 89 vorsieht. Der Abschnitt 40 stellt wiederum den Bereich der vorgesehenen Applikationslinie dar, auf den das Dichtungsprofil 2 noch nicht appliziert wurde und für den die Führung des freien Endes 22 von Bedeutung ist, um eine gute Stoßqualität bei dem umlaufend applizierten Dichtungsprofil 2 zu erreichen.

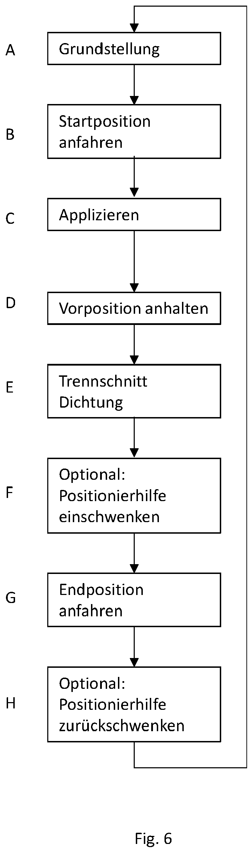

Bezugnehmend auf das in Fig. 6 gezeigte Ablaufdiagramm wird eine vorteilhafte weitere Ausgestaltung für ein Verfahren zum Applizieren eines umlaufenden Dichtungsprofils 2 auf einem Karosseriebauteil mittels eines an einem Roboterarm angeordneten Applikationskopfs erläutert. Für einen stationär angeordneten Applikationskopf würde das Verfahren aber entsprechend gelten, wobei dann das Karosseriebauteil von einem Roboter entsprechend an dem Applikationskopf entlanggeführt würde.

Ausgehend von einer Grundstellung A wird der Applikationskopf zu dem Karosseriebauteil bewegt und die Andrückeinheit in einem Verfahrensschritt B in eine Startposition verbracht, von der aus das Applizieren eines umlaufenden Dichtungsprofils auf dem Karosseriebauteil starten kann. Das Führungselement befindet sich dabei in der Ruheposition. Ausgehend von der Startposition startet die Anrollbewegung in einem Verfahrensschritt C, mit der das Dichtungsprofil auf das Karosseriebauteil aufgebracht wird. Das zu applizierende Dichtungsprofil wird dabei der Andrückeinheit zugeführt und die an dem Applikationskopf angeordnete Andrückeinheit wird von dem Roboterarm entlang einer vorgegebenen Linie an dem Karosseriebauteil entlang bewegt. Dabei wird das Dichtungsprofil mittels der Andrückeinheit auf das Karosseriebauteil aufgebracht. Wenn das Dichtungsprofil nahezu vollständig umlaufend appliziert ist, wie beispielsweise in Fig. 2 gezeigt, wird der Applikationskopf in einem Verfahrensschritt D in einer Vorposition angehalten. In einem Verfahrensschritt E wird dann mittels eine Trenneinheit des Applikationskopfes das Endlosdichtungsprofil durchtrennt. Dann wird in einem Verfahrensschritt F das Führungselement von der Ruheposition in die Arbeitsposition verbracht. Im Anschluss daran wird in einem Verfahrensschritt G das verbleibende Dichtungsprofilende appliziert, indem der Applikationskopf mit der Andrückeinheit in eine Endposition verbracht wird, wobei das freie Ende des Dichtungsprofils vor dem Aufbringen auf das Karosseriebauteil durch die Andrückeinheit von dem Führungselement geführt wird. Ist die Endposition erreicht, wird in einem Verfahrensschritt H das Führungselement von der Arbeitsposition zurück in die Ruheposition verbracht. Der Applikationskopf nimmt dann für einen nächsten Applikationsvorgang wieder die Grundstellung A ein. Insbesondere für den Fall, dass das Verfahren zum Applizieren einer Schiebedachdichtung in einer Karosserieöffnung vorgesehen ist, kann das Führungselement insbesondere den gesamten Applikationsvorgang über in der Arbeitsposition verbleiben. Die Schritte des Verstellens zwischen Ruhe- und Arbeitsposition würden insofern dabei entfallen.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Applikationsvorrichtung
- 2: Dichtungsprofil
- 21: Dichtungsprofilanfang (freies Ende)
- 22: Dichtungsprofilende (freies Ende)
- 3: Applikationskopf
- 4: Andrückeinheit
- 41: obere Begrenzung
- 42: untere Begrenzung
- 5: Zuführeinheit
- 6: Dichtungsprofileinlauf
- 7: Dichtungsprofilauslauf
- 8: Führungselement
- 81: erster Führungsbereich
- 82: Einlaufschräge
- 83: Abstützfläche
- 84: zweiter Führungsbereich
- 85: zweite Einlaufschräge
- 86: Aussparung
- 87: Kante des Führungsbereichs
- 88: unteres Führungsteil
- 89: oberes Führungsteil
- 9: Arbeitsposition
- 9`: zweite Arbeitsposition
- 10: Ruheposition
- 11: Mundstück
- 15: Träger
- 40: Karosseriebauteiloberfläche (noch) ohne appliziertes Dichtungsprofil
- 50: Richtung, in die ein Dichtungsprofil appliziert wird

## Patentansprüche

1. Applikationsvorrichtung (1) zum Applizieren eines umlaufenden Dichtungsprofils (2) auf einem Karosseriebauteil umfassend einen Applikationskopf (3), wobei der Applikationskopf (3) eine Andrückeinheit (4) und eine Zuführeinheit (5) umfasst, wobei die Zuführeinheit (5) ausgebildet ist, ein zu applizierendes Dichtungsprofil (2) der Andrückeinheit (4) über einen Dichtungsprofileinlauf (6) der Andrückeinheit (4) zuzuführen, und wobei die Andrückeinheit (4) ausgebildet ist, ein zugeführtes Dichtungsprofil (2) über einen Dichtungsprofilauslauf (7) der Andrückeinheit (4) auf das Karosseriebauteil aufzubringen, **dadurch gekennzeichnet, dass** der Applikationskopf (3) des Weiteren ein Führungselement (8) umfasst, wobei das Führungselement (8) in einer Arbeitsposition (9) zur Führung eines freien Endes (21, 22) eines zu applizierenden Dichtungsprofils (2), das den Dichtungsprofileinlauf (6) verlassen hat, ausgebildet ist.

2. Applikationsvorrichtung (1) nach Anspruch 1, **dadurch gekennzeichnet, dass** das Führungselement (8) in der Arbeitsposition (9) bezogen auf eine Richtung (50), in die ein Dichtungsprofil (2) auf ein Karosseriebauteil appliziert wird, vor dem Dichtungsprofilauslauf (7) angeordnet ist.

3. Applikationsvorrichtung (1) nach Anspruch 1 oder Anspruch 2, **dadurch gekennzeichnet, dass** das Führungselement (8) in der Arbeitsposition (9) derart angeordnet ist, dass ein freies Ende (21, 22) eines zu applizierenden Dichtungsprofils (2) vor dem Erreichen des Dichtungsprofilauslaufs (7) von dem Führungselement (8) zumindest teilweise abgestützt wird.

4. Applikationsvorrichtung (1) nach einem der vorstehenden Ansprüche, **dadurch gekennzeichnet, dass** das Führungselement (8) in der Arbeitsposition (9) derart an dem Applikationskopf (3) angeordnet ist, dass sich ein Führungsbereich (81) des Führungselements (8) parallel zu einer Karosseriebauteiloberfläche erstreckt, auf die ein Dichtungsprofil (2) appliziert wird.

5. Applikationsvorrichtung (1) nach einem der vorstehenden Ansprüche, **dadurch gekennzeichnet, dass** der Applikationskopf (3) ein dem Dichtungsprofileinlauf (6) der Andrückeinheit (4) zugeordnetes Mundstück (11) aufweist, wobei das Mundstück (11) ausgebildet ist, das der Andrückeinheit (4) zugeführte Dichtungsprofil (2) zu führen, wobei der Abstand zwischen dem Führungselement (8) in der Arbeitsposition (9) und dem Dichtungsprofilauslauf (7) höchstens dem Abstand zwischen dem Mundstück (11) und dem Dichtungsprofilauslauf (7) entspricht.

6. Applikationsvorrichtung (1) nach einem der vorstehenden Ansprüche, **dadurch gekennzeichnet, dass** der Abstand zwischen dem Führungselement (8) in der Arbeitsposition (9) und dem Dichtungsprofilauslauf (7) kleiner oder gleich 30 mm ist.

7. Applikationsvorrichtung (1) nach einem der vorstehenden Ansprüche, **dadurch gekennzeichnet, dass** das Führungselement (8) zwischen der Arbeitsposition (9) und einer Ruheposition (10), in der keine Führung eines zu applizierenden Dichtungsprofils (2) erfolgen kann, verstellbar ist.

8. Applikationsvorrichtung (1) nach Anspruch 7, **dadurch gekennzeichnet, dass** das Führungselement (8) verschwenkbar ausgebildet ist, wobei das Führungselement (8) durch ein Verschwenken zwischen der Arbeitsposition (9) und der Ruheposition (10) verstellbar ist.

9. Applikationsvorrichtung (1) nach Anspruch 7 oder Anspruch 8, **dadurch gekennzeichnet, dass** der Applikationskopf (3) ein dem Dichtungsprofileinlauf (6) der Andrückeinheit (4) zugeordnetes Mundstück (11) aufweist, wobei das Mundstück (11) ausgebildet ist, das der Andrückeinheit (4) zugeführte Dichtungsprofil (2) zu führen, wobei die Applikationsvorrichtung (1) ausgebildet ist, das Führungselement (8) von der Ruheposition (10) in die Arbeitsposition (9) zu verstellen, wenn ein freies Ende (21, 22) eines zu applizierenden Dichtungsprofils (2) eine vorbestimmte Position in Bezug zu dem Mundstück (11) erreicht hat.

10. Applikationsvorrichtung (1) nach einem der Ansprüche 1 bis 6, **dadurch gekennzeichnet, dass** das Führungselement (8) feststehend an dem Applikationskopf (3) ist, und die Applikationsvorrichtung (1) zum Applizieren einer Schiebedachdichtung in einer Karosserieöffnung eingerichtet ist.

11. Verfahren zum Applizieren eines umlaufenden Dichtungsprofils (2) auf einem Karosseriebauteil, wobei das zu applizierende Dichtungsprofil (2) einer Andrückeinheit (4) zugeführt wird, die Andrückeinheit (4) relativ zu dem Karosseriebauteil bewegt wird, und mittels der Andrückeinheit (4) das Dichtungsprofil (2) auf das Karosseriebauteil aufgebracht wird, **dadurch gekennzeichnet, dass** ein freies Ende (21, 22) des Dichtungsprofils (2) vor dem Aufbringen auf das Karosseriebauteil von einem Führungselement (8) geführt wird.

12. Verfahren nach Anspruch 11, **dadurch gekennzeichnet, dass** das Führungselement (8) zum Führen des freien Endes (21, 22) des Dichtungsprofils (2) von einer Ruheposition (10), in der keine Führung erfolgen kann, in eine Arbeitsposition (9), in der die Führung erfolgen kann, verbracht wird.

13. Verfahren nach Anspruch 11 oder Anspruch 12, **dadurch gekennzeichnet, dass** das Dichtungsprofil (2) mit einer Applikationsvorrichtung (1) nach einem der Ansprüche 1 bis 10 appliziert wird.
